# FASCICULE DE BREVET EUROPEEN

(11) **EP 2 132 016 B1**
(45) Date de publication et mention de la délivrance du brevet: **03.01.2018**
(21) Numéro de dépôt: 08775679.7
(22) Date de dépôt: 05.03.2008
(51) Int. Cl.: B29C 31/04, B29C 31/06, B29C 43/34, B29C 45/18, B29C 45/53

(54) **DISPOSITIF DE MOULAGE DE PIECES EN MATIERE PLASTIQUE**
VORRICHTUNG ZUR FORMUNG VON TEILEN AUS EINEM KUNSTSTOFFMATERIAL
DEVICE FOR MOULDING PARTS OF A PLASTIC MATERIAL

(30) Priorité: 07.03.2007 FR 0753700
(43) Date de publication de la demande: 16.12.2009
(73) Titulaire: Plastic Omnium Auto Exterieur Services, 69007 Lyon (FR)
(72) Inventeur: BRIALON, Paul, F-07100 Annonay (FR); GENISSIEUX, Christophe, F-38200 Vienne (FR); DHUICQUE, Jean-Paul, F-38550 Le Peage de Roussillon (FR); PONSON, Gilbert, F-42220 Bourg Argental (FR)
(74) Mandataire: Remy, Vincent Noel Paul
(86) Numéro de dépôt international: PCT/FR2008/050376
(87) Numéro de publication internationale: WO 2008/125777

(56) Documents cités:
- EP-A- 1 007 319
- US-A- 3 375 309
- US-B1- 6 241 935

## Description

La présente invention concerne un dispositif de moulage de pièces en matière plastique.

On connaît déjà, dans l'état de la technique, un dispositif de moulage de pièces en matière plastique, du type comportant :
- un moule, comprenant une partie fixe agencée sur un plateau fixe d'une presse, et une partie mobile agencée sur un plateau mobile de la presse,
- au moins un canal d'injection de matière dans la partie mobile du moule,
- un dispositif d'alimentation du moule en matière plastique, comportant une installation fixe comprenant un premier dispositif de dosage d'une première quantité de matière,

Dans un dispositif de moulage de ce type, la partie mobile du moule est raccordée au dispositif de dosage à l'aide d'au moins un conduit flexible, afin de relier un élément fixe, c'est-à-dire le dispositif de dosage agencé sur l'installation fixe, à un élément mobile, c'est-à-dire la partie mobile du moule.

Toutefois, un tel conduit flexible induit des pertes de charge importantes, notamment du fait que ce conduit flexible subit des variations de volume et des déformations en fonction de la position de la partie mobile du moule. Ainsi, la pression de transmission de matière, qui est généralement de 600 bars en sortie du dispositif de dosage, tombe entre 100 et 200 bars à l'entrée du moule, du fait des pertes de charge.

Or, les pressions réduites à l'entrée du moule impliquent généralement une durée d'injection relativement longue. En outre, pour que cette pression à l'entrée du moule demeure suffisante pour que l'injection soit possible, même avec une longue durée, il est nécessaire de fournir une énergie importante à la sortie du dispositif de dosage pour compenser les pertes de charge.

Le document EP-B1-1 007 319 décrit un dispositif de moulage de pièces en matière plastique selon le préambule de la revendication 1.

L'invention a notamment pour but de remédier à ces inconvénients, en fournissant un dispositif de moulage permettant de réduire la durée d'injection de matière dans le moule, tout en augmentant la qualité de cette injection malgré les pertes de charge dans les conduits raccordant le dispositif de dosage au moule.

A cet effet, l'invention a pour objet un dispositif de moulage de pièces en matière plastique selon la revendication 1. Le deuxième dispositif de dosage étant agencé sur le plateau mobile de la presse, il est fixe par rapport au canal d'injection. Ainsi, ce deuxième dispositif de dosage et le canal d'injection peuvent être raccordés à l'aide d'au moins un conduit rigide et court, occasionnant peu de pertes de charge entre ce deuxième dispositif de dosage et le canal d'injection.

Le dispositif selon l'invention est avantageux en ce qu'il dissocie deux fonctions qui étaient remplies par un seul dispositif de dosage dans l'état de la technique.

En effet, dans l'état de la technique, le dispositif de dosage assurait à la fois le dosage d'une certaine quantité de matière à injecter dans le moule et la mise en pression de cette quantité de matière, pour que le moulage se déroule dans des conditions satisfaisantes.

Grâce à l'invention, la mise en pression est assurée par le deuxième dispositif de dosage, le premier dispositif de dosage n'ayant plus que sa fonction première de dosage d'une certaine quantité de matière à fournir au deuxième dispositif de dosage.

Ainsi, en sortie du premier dispositif de dosage, il suffit de donner à la quantité de matière dosée une pression suffisante pour la pousser jusqu'au deuxième dispositif de dosage, sans avoir à lui imprimer la pression nécessaire au bon déroulement du moulage.

De ce fait, il est possible d'utiliser des pressions en sortie du deuxième dispositif de dosage qui sont inférieures à celles utilisées en sortie du dispositif de dosage de l'état de la technique, tout en atteignant des pressions satisfaisantes en entrée du moule. Ces pressions satisfaisantes permettent non seulement un gain d'énergie mais également une réduction satisfaisante de la durée d'injection, et donc de la durée d'un cycle de moulage.

En outre, puisque le deuxième dispositif de dosage permet d'imposer une pression satisfaisante pour l'injection, il ne pose aucune difficulté d'utiliser des conduits flexibles entre les premier et deuxième dispositifs de dosage, et en particulier des conduits flexibles dans lesquels la pression maximale admissible est moins importante que dans les conduits de l'état de la technique, donc des conduits flexibles meilleur marché.

On notera que l'invention rend également possible l'injection de volumes plus importants que dans l'état de la technique.

Par ailleurs, comme il n'est plus nécessaire de mettre en oeuvre une aussi forte pression en sortie des premier et deuxième dispositifs de dosage pour tenir compte des pertes de charge, il est possible d'utiliser de la matière à basse densité, relativement fragile, telle que de l'AMC (acronyme anglais de « Advanced Molding Compound ») allégé dans laquelle des billes de verre sont incorporées. En effet, ces billes de verre sont moins susceptibles d'être endommagées à basse pression qu'à haute pression.

On notera également que, puisque les pressions mises en oeuvre sont relativement basses, les sollicitations appliquées au dispositif de moulage dans son ensemble sont relativement faibles, ce qui augmente sa durée de vie.

Enfin, on notera que, du fait qu'un dispositif de dosage est agencé à proximité de la partie mobile du moule, notamment lorsqu'ils sont raccordés par un conduit rigide, il est possible de régler les paramètres de l'injection de manière plus simple et plus précise. Il est ainsi notamment possible d'adapter les paramètres de l'injection à la matière injectée, par exemple afin de compenser les modifications des propriétés physiques de la matière, ces propriétés physiques dépendant du temps. En effet, il est connu que la matière évolue au cours du temps, notamment en devenant de plus en plus visqueuse, entre le début et la fin de l'utilisation d'un même lot de matière pour le moulage d'une série de pièces. Il est particulièrement intéressant de pouvoir compenser ces écarts, en adaptant le procédé au cours de l'utilisation d'un même lot.

De manière générale, comme on diminue la distance entre le dispositif de dosage et le moule, puisque le deuxième dispositif de dosage est sur le moule, on laisse moins de temps pour les fluctuations de la matière et ainsi on maîtrise davantage l'injection.

De manière optionnelle, un dispositif de moulage selon l'invention peut en outre comporter l'une ou plusieurs des caractéristiques suivantes.
- Le deuxième dispositif de dosage est raccordé au premier dispositif de dosage à l'aide d'au moins un conduit de raccordement flexible. Ce conduit de raccordement flexible n'entrave pas le mouvement de la partie mobile du moule par rapport à l'installation fixe, la perte de charge dans ce conduit flexible étant sans effet sur l'injection proprement dite.
- Le canal d'injection est raccordé au deuxième dispositif de dosage à l'aide d'au moins un conduit de raccordement rigide. L'utilisation de ce conduit rigide limite les pertes de charge entre le deuxième dispositif de dosage et le moule, et permet également de mieux maîtriser l'injection de matière dans le moule, puisque le volume du conduit rigide est invariable, ce qui permet une meilleure reproductibilité des moulages.
- La longueur du conduit raccordant le deuxième dispositif de dosage au moule est inférieure à 2 mètres, afin de limiter encore les pertes de charge.
- Le dispositif de bourrage comporte des moyens de fourniture de matière plastique à Basse Pression dans le premier dispositif de dosage, et une trémie permettant le stockage de la matière. On rappelle qu'on appelle Basse Pression une pression inférieure à 10 bars.
- Le dispositif de bourrage comporte des moyens de fourniture de matière plastique à Moyenne Pression dans le premier dispositif de dosage. On rappelle qu'on appelle Moyenne Pression une pression comprise entre 10 et 60 bars.
- Le dispositif de moulage comporte des moyens de chauffage, agencés de façon à préchauffer la matière plastique circulant entre le dispositif de bourrage et le premier dispositif de dosage.
- L'installation fixe comporte une trémie de stockage de matière plastique destinée à alimenter le moule en matière plastique.
- Chaque dispositif de dosage est muni de moyens de régulation hydraulique en pression et en débit.
- La matière plastique est une matière thermodurcissable, par exemple choisie parmi le AMC (acronyme anglais de « Advanced Molding Compound »), BMC (acronyme anglais de « Bulk Molding Compound »), le SMC injectable (acronyme anglais de « Sheet Molding Compound ») ou une matière composite.

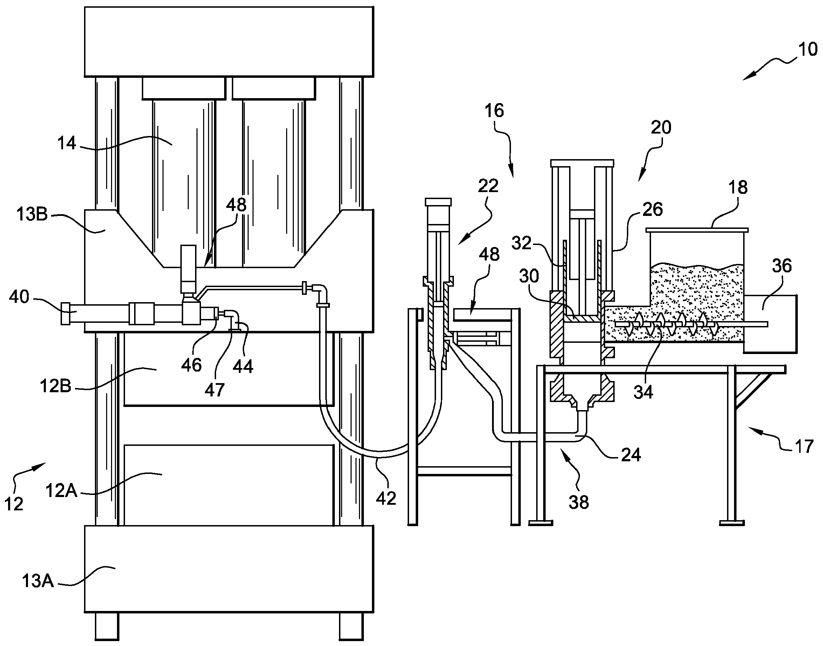

L'invention sera mieux comprise à la lecture de la description qui va suivre, donnée uniquement à titre d'exemple et faite en se référant à la figure unique, représentant un dispositif de moulage selon un exemple de mode de réalisation de l'invention.

On a représenté sur la figure un dispositif de moulage de pièces en matière plastique, désigné par la référence générale 10. De préférence, la matière plastique est une matière thermodurcissable, par exemple du BMC, AMC, SMC ou une matière composite.

Le moulage des pièces est réalisé à l'aide d'un moule 12, comportant une partie fixe 12A fixée à un plateau fixe de presse 13A, et une partie mobile 12B fixée à un plateau 13B de presse, mobile par rapport au plateau fixe 13A à l'aide de moyens de déplacement 14, par exemple de vérins hydrauliques.

Le moule 12 est alimenté en matière thermodurcissable par un dispositif d'alimentation 16.

Le dispositif d'alimentation 16 comporte une installation fixe 17 comprenant une trémie de stockage 18, dans laquelle est stockée la matière thermodurcissable destinée à alimenter le moule 12.

La trémie 18 est raccordée à un dispositif de bourrage 20, raccordé à un premier dispositif de dosage 22 à l'aide d'un conduit de raccordement rigide 24, de façon à pouvoir bourrer ce premier dispositif de dosage 22 de matière thermodurcissable. Le dispositif de bourrage 20 et le premier dispositif de dosage 22 sont tous les deux portés par l'installation fixe 17.

Le dispositif de bourrage 20 comprend par exemple des moyens 26 de fourniture de matière à Basse Pression, raccordés à la trémie 18.

Les moyens de fourniture Basse Pression 26 comportent un piston 30 destiné à se déplacer dans un corps de piston 32 de façon à expulser la matière thermodurcissable dans le conduit de raccordement rigide 24. Par ailleurs, la trémie 18 comprend une vis sans fin 34 entraînée par un moteur 36 de façon à rapporter la matière provenant de la trémie 18 vers les moyens de fourniture 26 du dispositif de bourrage 20. en augmentant la pression de fourniture.

En variante, le dispositif de bourrage 20 pourrait comporter des moyens de fourniture de matière à Moyenne Pression directement raccordés à un réservoir.

Le conduit de raccordement 24 est relativement court afin de limiter les pertes de charge entre le dispositif de bourrage 20 et le dispositif de dosage 22, par exemple de longueur inférieure à 2 mètres.

De préférence, ce conduit de raccordement 24 est muni de moyens de chauffage 38 destinés à préchauffer la matière thermodurcissable circulant entre le dispositif de bourrage 20 et le dispositif de dosage 22. Ces moyens de chauffage 38 sont de préférence agencés sur des parties rigide du dispositif de moulage. Par exemple, le conduit 24 comporte des tuyaux intérieur et extérieur coaxiaux, et un liquide caloporteur, tel que de l'eau chaude, circule entre les tuyaux intérieur et extérieur afin de réchauffer par transfert de chaleur la matière plastique circulant dans le tuyau intérieur.

Le dispositif de dosage 22, rempli de matière thermodurcissable, permet de doser une première quantité de matière destinée à être fournie à un deuxième dispositif de dosage 40, agencé sur le plateau mobile 13B, et donc de manière fixe par rapport à la partie mobile du moule 12, à l'aide d'un conduit de raccordement flexible 42. Par exemple, le deuxième dispositif de dosage 40 pourrait être agencé sur la partie mobile du moule 12.

Le deuxième dispositif de dosage 40 permet de doser une deuxième quantité de matière destinée à être fournie au moule par l'intermédiaire d'un ou de plusieurs canaux 44 d'injection de la matière thermodurcissable dans le moule. Ces canaux d'injection 44 sont agencés sur le plateau mobile 13B, et donc de manière fixe par rapport à la partie mobile 12B du moule, et raccordés au deuxième dispositif de dosage 40 à l'aide d'un conduit de raccordement rigide 46, de longueur préférentiellement inférieure à 2 mètres afin de limiter les pertes de charge dans ce conduit 46. Chacun des canaux d'injection 44 comporte habituellement, à son extrémité d'injection, un injecteur 47 notamment destiné à ouvrir et obturer ce canal d'injection 44, pour l'alimentation ou non en matière dans le moule.

De préférence, les premier 22 et deuxième 40 dispositifs de dosage sont munis de moyens 48 de régulation hydraulique en pression et en débit.

On notera enfin que l'invention n'est pas limitée au mode de réalisation précédemment décrit, mais englobe toute variante reprenant, avec des moyens équivalents, ses caractéristiques essentielles.

Par exemple, le dispositif de moulage 10 pourrait en variante comporter plusieurs deuxièmes dispositifs de dosage.

## Revendications

1. Dispositif (10) de moulage de pièces en matière plastique, du type comportant :
- un moule (12), comprenant une partie fixe (12A) agencée sur un plateau fixe (13A) d'une presse, et une partie mobile (12B) agencée sur un plateau mobile (13B) de la presse,
- au moins un canal (44) d'injection de matière dans la partie mobile (12B) du moule, comportant un injecteur (47) destiné à ouvrir et cloturer ce canal,
- un dispositif (16) d'alimentation du moule (12) en matière plastique, comportant une installation fixe (17) comprenant un premier dispositif (22) de dosage d'une première quantité de matière, et un dispositif de bourrage (20), raccordé au premier dispositif de dosage (22) à l'aide d'au moins un conduit de raccordement rigide (24) de façon à pouvoir bourrer le premier dispositif de dosage (22) de matière plastique
**caractérisé en ce que** le dispositif d'alimentation (16) comprend au moins un deuxième dispositif de dosage (40) agencé sur le plateau mobile (13B), ce deuxième dispositif de dosage (40) étant raccordé au premier dispositif de dosage (22) de manière à être alimenté en matière plastique par ce premier dispositif de dosage (22), et étant raccordé au canal d'injection (44) de matière dans la partie mobile (12B) du moule (12) de façon à pouvoir l'alimenter en matière plastique.

2. Dispositif de moulage (10) selon la revendication 1, dans lequel le deuxième dispositif de dosage (40) est raccordé au premier dispositif de dosage (22) à l'aide d'au moins un conduit (42) de raccordement flexible:

3. Dispositif de moulage (10) selon la revendication 1 ou 2, dans lequel le canal d'injection (44) est raccordé au deuxième dispositif de dosage (40) à l'aide d'au moins un conduit rigide (46).

4. Dispositif de moulage (10) selon l'une quelconque des revendications précédentes, dans lequel le dispositif de bourrage (20) comporte des moyens de fourniture de matière plastique à Moyenne Pression dans le premier dispositif de dosage.

5. Dispositif de moulage (10) selon l'une quelconques des revendications précédentes, dans lequel le dispositif de bourrage (20) comporte des moyens (26) de fourniture de matière plastique à Basse Pression dans le premier dispositif de dosage.

6. Dispositif de moulage (10) selon l'une quelconque des revendications précédentes, comportant des moyens (38) de chauffage, agencés de façon à préchauffer la matière plastique circulant entre le dispositif de bourrage (20) et le premier dispositif de dosage (22).

7. Dispositif de moulage (10) selon l'une quelconque des revendications précédentes, dans lequel l'installation fixe (17) comporte une trémie (18) de stockage de matière plastique pour l'alimentation du moule (12) en matière plastique.

8. Dispositif de moulage (10) selon l'une quelconque des revendications précédentes, dans lequel chaque dispositif de dosage (22, 40) est muni de moyens (48) de régulation hydraulique en pression et en débit.

9. Dispositif de moulage (10) selon l'une quelconque des revendications précédentes, dans lequel la matière plastique est une matière thermodurcissable, par exemple choisie parmi le AMC, le BMC, le SMC ou une matière composite.

## Patentansprüche

1. Vorrichtung (10) zur Formung von Teilen aus Kunststoff des Typs aufweisend:
- ein Formwerkzeug (12), umfassend einen feststehenden Teil (12A), der auf einer feststehenden Platte (13A) einer Presse eingerichtet ist, und einen beweglichen Teil (12B), der auf einer beweglichen Platte (13B) der Presse eingerichtet ist,
- mindestens einen Kanal (44) zum Einspritzen von Material in den beweglichen Teil (12B) des Formwerkzeugs, mit einem Einspritzelement (47), das zum Abdecken und Verschließen dieses Kanals bestimmt ist,
- eine Vorrichtung (16) zum Beschicken des Formwerkzeugs (12) mit Kunststoff, mit einer feststehenden Installation (17), die eine erste Vorrichtung (22) zum Dosieren einer ersten Materialmenge umfasst, und einer Füllungsvorrichtung(20), die mit der ersten Dosiervorrichtung (22) mit Hilfe mittels einer starren Verbindungsrohrleitung (24) in der Form verbunden ist, dass sie die erste Dosiervorrichtung (22) mit Kunststoff füllen kann,
**dadurch gekennzeichnet, dass** die Beschickungsvorrichtung (16) mindestens eine zweite Dosiervorrichtung (40) umfasst, die auf der beweglichen Platte (13B) eingerichtet ist, wobei diese zweite Dosiervorrichtung (40) mit der ersten Dosiervorrichtung (22) in der Form verbunden ist, dass sie durch diese erste Dosiervorrichtung (22) mit Kunststoff beschickt werden kann, und wobei sie mit dem Kanal zum Einspritzen (44) von Material in den beweglichen Teil (12B) des Formwerkzeugs (12) in der Form verbunden ist, dass sie ihn mit Kunststoff beschicken kann.

2. Formungsvorrichtung (10) nach Anspruch 1, wobei die zweite Dosiervorrichtung (40) mit der ersten Dosiervorrichtung (22) mit Hilfe mindestens einer flexiblen Verbindungsrohrleitung (42) verbunden ist.

3. Formungsvorrichtung (10) nach Anspruch 1 oder 2, wobei der Einspritzkanal (44) mit der zweiten Dosiervorrichtung (40) mit Hilfe mindestens einer starren Rohrleitung (46) verbunden ist.

4. Formungsvorrichtung (10) nach einem der vorhergehenden Ansprüche, wobei die Füllungsvorrichtung (20) Mittel zum Abgeben von Kunststoff unter mittlerem Druck in die erste Dosiervorrichtung aufweist.

5. Formungsvorrichtung (10) nach einem der vorhergehenden Ansprüche, wobei die Füllungsvorrichtung (20) Mittel (26) zum Abgeben von Kunststoff unter hohem Druck in die erste Dosiervorrichtung aufweist.

6. Formungsvorrichtung (10) nach einem der vorhergehenden Ansprüche, aufweisend Aufheizmittel (38), die in der Form eingerichtet sind, dass sie den Kunststoff, der zwischen der Füllungsvorrichtung (20) und der ersten Dosiervorrichtung (22) umläuft, aufheizt.

7. Formungsvorrichtung (10) nach einem der vorhergehenden Ansprüche, wobei die feststehende Installation (17) einen Trichter (18) zum Bevorraten von Kunststoff für das Beschicken des Formwerkzeugs (12) mit Kunststoff aufweist.

8. Formungsvorrichtung (10) nach einem der vorhergehenden Ansprüche, wobei jede Dosiervorrichtung (22, 40) mit Mitteln (48) zum hydraulischen Regeln von Druck und Durchfluss versehen ist.

9. Formungsvorrichtung (10) nach einem der vorhergehenden Ansprüche, wobei der Kunststoff ein duroplastisches Material ist, das zum Beispiel ausgewählt ist aus AMC, BMC, SMC oder einem Verbundmaterial.

## Claims

1. A molding device (10) for molding plastics material parts, the device being of the type comprising:
• a mold (12) comprising a stationary portion (12A) arranged on a stationary platen (13A) of a press, and a movable portion (12B) arranged on a movable platen (13B) of the press;
• at least one injection channel (44) for injecting material into the movable mold portion (12B), comprising an injector (47) for the purpose of opening and closing the injection channel 44 ; and
• a feeder device (16) for feeding the mold (12) with plastics material, the feeder device comprising a stationary installation (17) including a first metering device (22) for metering out a first quantity of material; and a cramming device (20) connected to the first metering device (22) via at least one rigid connection duct (24) so as to be able to cram the first metering device (22) with plastics material,
the molding device being **characterized in that** the feeder device (16) includes at least one second metering device (40) arranged on the movable platen (13B), said second metering device (40) being connected to the first metering device (22) in such a manner as to be fed with plastics material by said first metering device (22), and being connected to the injection channel (44) for injecting material into the movable portion (12B) of the mold (12) in such a manner as to be able to feed it with plastics material.

2. A molding device (10) according to claim 1, wherein the second metering device (40) is connected to the first metering device (22) via at least one flexible connection hose (42).

3. A molding device (10) according to claim 1 or claim 2, wherein the injection channel (44) is connected to the second metering device (40) via at least one rigid duct (46) .

4. A molding device (10) according to any preceding claim, wherein the cramming device (20) includes means for delivering plastics material at Medium Pressure into the first metering device.

5. A molding device (10) according to any preceding claim, wherein the cramming device (20) includes means (26) for delivering plastics material at Low Pressure into the first metering device.

6. A molding device (10) according to any preceding claim, including heater means (38) arranged to preheat the plastics material flowing between the cramming device (20) and the first metering device (22).

7. A molding device (10) according to any preceding claim, wherein the stationary installation (17) includes a hopper (18) for storing plastics material for feeding the mold (12) with plastics material.

8. A molding device (10) according to any preceding claim, wherein each metering device (22, 40) is provided with hydraulic pressure and flow rate regulator means (48) .

9. A molding device (10) according to any preceding claim, wherein the plastics material is a thermosetting material, e.g. selected from AMC, BMC, SMC, or a composite material.
